# EUROPEAN PATENT APPLICATION

(11) **EP 4 700 218 A2**
(43) Date of publication of application: **25.02.2026**
(21) Application number: 25197470.5
(22) Date of filing: 21.08.2025
(51) Int. Cl.: F02C 3/30, B64D 37/04, B64D 37/16, F02C 7/143

(54) **WATER INJECTION SYSTEM FOR PERFORMANCE AND DURABILITY AUGMENTATION WITH SELECTIVELY UTILIZED WATER TANK**

(30) Priority: 23.08.2024 US 202418813724
(71) Applicant: RTX Corporation, Farmington, CT 06032 (US)
(72) Inventor: EVANS, Brandon M., Farmington 06032 (US); TERWILLIGER, Neil J., Farmington 06032 (US)
(74) Representative: Dehns

(57) **Abstract**

An aircraft propulsion system (20) includes a core engine (25) with a core flow path (C) through a main compressor (22) where an inlet airflow is compressed and communicated to a combustor (56) to generate an exhaust gas flow (35) that is expanded through a main turbine section (28) to generate power used to drive the main compressor and a propulsive fan. A water augmentation system (62) includes at least one location (138; 140) where water is communicated into the core flow path, an aircraft structure (88) that includes a water storage space (92; 94), and a water storage system (65) that is operable for storing and supplying water to the water augmentation system (62). The water storage system includes a portion that corresponds to the water storage space, and a controller (74) that is programmed to operate the water augmentation system (62) according to a selected mode of operation.

## Description

### TECHNICAL FIELD

The present invention relates generally to an aircraft propulsion system with a mode selectable water augmentation system and selectively usable water tank.

### BACKGROUND

Gas turbine engines typically include a compressor where inlet air is compressed and delivered into a combustor. In the combustor, the compressed air is mixed with fuel and ignited to generate an exhaust gas flow. Water may be injected into the core flow at different locations to improve engine power, emissions, and durability. The specific location and type of water augmentation that most benefits engine performance may vary based on many different operating parameters. Moreover, a tank containing water is heavy and may occupy a substantial volume on board an aircraft that is not necessary for all engine operating conditions and flight profiles.

### SUMMARY

An aircraft propulsion system according to a first aspect of the invention includes a core engine that includes a core flow path through a main compressor where an inlet airflow is compressed and communicated to a combustor to generate an exhaust gas flow that is expanded through a main turbine section to generate power used to drive the main compressor and a propulsive fan, a water augmentation system that includes at least one location where water is communicated into the core flow path, an aircraft structure that includes a water storage space, a water storage system that is operable for storing and supplying water to the water augmentation system, the water storage system includes a portion that corresponds to the water storage space, and a controller that is programmed to operate the water augmentation system according to a selected mode of operation.

In a further embodiment of the foregoing, the aircraft propulsion system further includes a removable tank that is selectively mountable into the water storage space.

In a further embodiment of any of the foregoing aircraft propulsion systems, the water storage space includes a portion of a cargo space within the aircraft structure.

In a further embodiment of any of the foregoing aircraft propulsion systems, the water storage space is arranged in the cargo space such that other items may be stored and removed without removing the removable tank.

In a further embodiment of any of the foregoing aircraft propulsion systems, the augmentation system includes an intercooling system where water is injected into the compressor section for cooling a portion of an airflow through the compressor section.

In a further embodiment of any of the foregoing aircraft propulsion systems, the augmentation system includes a combustor injection system where water is injected into the combustor to increase a mass flow of the exhaust gas expanded through the main turbine section.

In a further embodiment of any of the foregoing, the aircraft propulsion system further includes a monitoring system that is configured to generate information indicative of an amount of water available for use by the water augmentation system.

In a further embodiment of any of the foregoing aircraft propulsion systems, the water storage space includes a portion of an aircraft fuselage or an engine nacelle that is selectively fillable with water.

In a further embodiment of any of the foregoing aircraft propulsion systems, the water storage system further includes a transport system that is configured to supply water from a storage tank to the water augmentation system and to purge water from the storage tank and the water augmentation system.

In a further embodiment of any of the foregoing aircraft propulsion systems, the water storage system is configured to prevent water stored therein from freezing.

An aircraft propulsion system according to another aspect of the invention includes a core engine that includes a core flow path through a main compressor where an inlet airflow is compressed and communicated to a combustor to generate an exhaust gas flow that is expanded through a main turbine section to generate power used to drive the main compressor and a propulsive fan, a water augmentation system that includes at least one location where water is communicated into the core flow path, an aircraft structure that includes a defined water storage space, a water storage system that is operable for storing and supplying water to the water augmentation system, the water storage system includes a storage tank that is removably mounted into the defined water storage space, and a controller that is programmed to operate the water augmentation system according to a selected mode of operation.

In a further embodiment of the foregoing aircraft propulsion system, the augmentation system includes an intercooling system where water is injected into the compressor section for cooling a portion of a core flow through the compressor section and a combustor injection system where water is injected into the combustor to increase a mass flow of the exhaust gas expanded through the main turbine section.

In a further embodiment of any of the foregoing aircraft propulsion systems, the water augmentation system further includes a control system that is operated by the controller for controlling transport of water from the water storage system to the water augmentation system according to the selected operating mode.

In a further embodiment of any of the foregoing aircraft propulsion systems, the water storage space includes a portion of a cargo space within the aircraft structure.

In a further embodiment of any of the foregoing aircraft propulsion systems, the water storage system further includes a transport system that is configured to supply water from a storage tank to the water augmentation system and to purge water from the storage tank and the water augmentation system.

A method configuring operating of an aircraft propulsion system according to another aspect of the invention includes selecting an operating mode of a water augmentation system, determining an amount of water required to operate an aircraft propulsion system according to the selected operating mode of the water augmentation system, determining an amount of water that may be held within a water storage space of the aircraft, filling the water storage space to include the determined amount of water required, the water storage space is operably coupled to the engine to enable injection of water from the water storage space to the engine.

In a further embodiment of the foregoing method, selecting the operating mode of the water augmentation system includes selecting one of a durability mode, an emission reduction mode, and a thrust augmentation mode.

In a further embodiment of any of the foregoing methods, the water augmentation system is configured to introduce water into a compressor section of the aircraft propulsion system in the durability mode and into the combustor section of the aircraft propulsion system in one of the emission reduction mode and the thrust augmentation mode.

In a further embodiment of any of the foregoing methods, the water storage space includes a portion of a cargo space within the aircraft structure and the method further includes installing a water storage tank into the portion of the cargo space.

In a further embodiment of any of the foregoing methods, the water storage space includes at least a portion of a fuselage or an engine nacelle.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft including defined water storage spaces.
Figure 2 is a schematic view of an example propulsion system including a water augmentation system.
Figure 3 is a simplified schematic view of the example controller for the example aircraft propulsion system.
Figure 4 is schematic view a process for operating the aircraft propulsion system with the water augmentation system.

### DETAILED DESCRIPTION

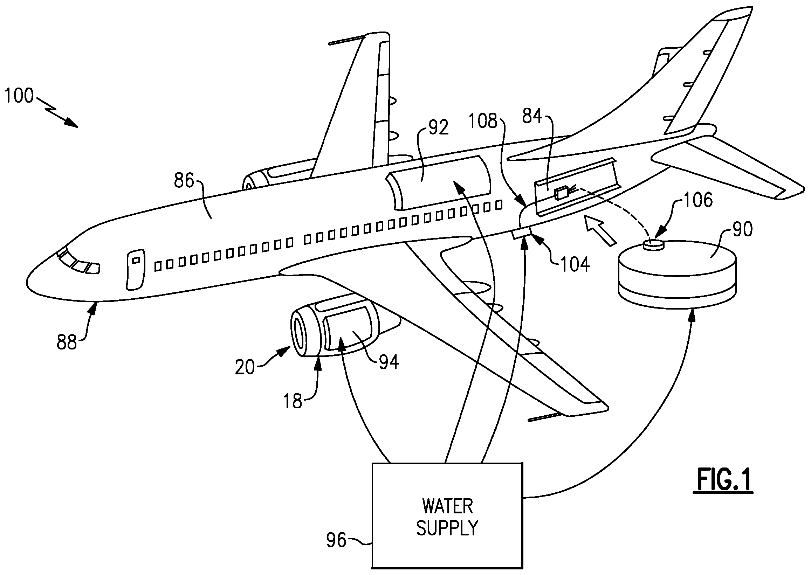

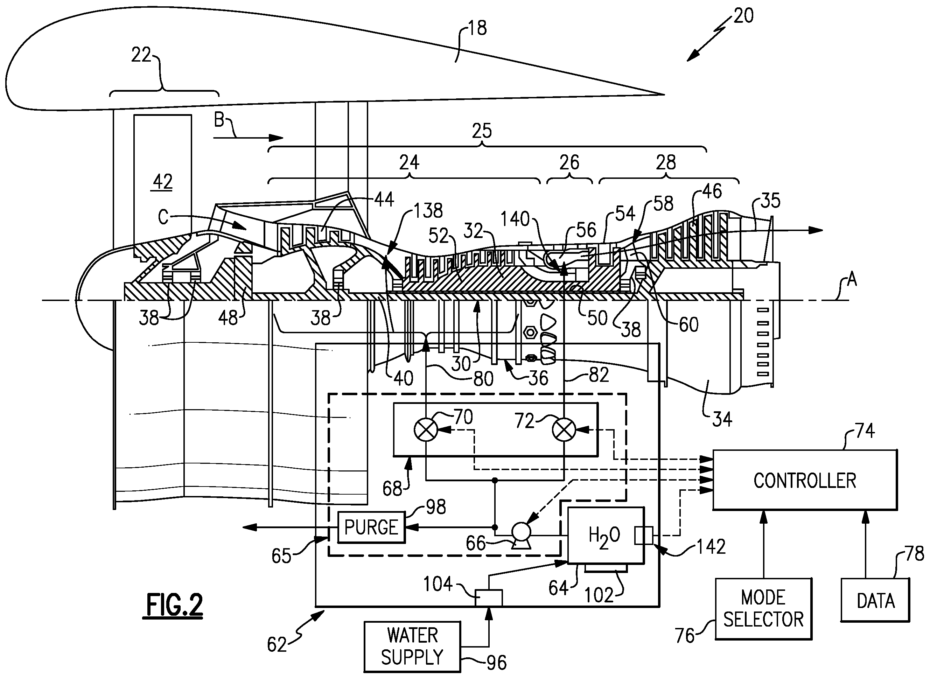

Figure 1 and 2 schematically illustrates an aircraft 100 and aircraft propulsion system 20 with a water augmentation system 62 for augmenting engine operation according to a selected mode. The aircraft 100 includes at least one defined water storage space 92, 94 and/or cargo area 84 for storing water utilized by the water augmentation system 62. The defined water spaces 92 and 94 may be optionally filled with water from a ground based water supply 96. A water storage space may include a removable water tank 90 that is installed within the cargo area 84 to facilitate both water augmented and non-water augmented operation. Removal of the tank 90 provides for the freeing of space and reduction in weight during operation that does not utilize water augmentation.

The example propulsion system 20 is disclosed as a two-spool turbofan that generally incorporates a fan section 22 and a core engine 25 that generates an exhaust gas flow for driving the fan section 22. The core engine 25 includes a compressor section 24, a combustor section 26, and a turbine section 28. The fan section 22 may include a single-stage fan having a plurality of fan blades 42. The fan blades 42 may have a fixed stagger angle or may have a variable pitch to direct incoming airflow from an engine inlet. The fan section 22 drives air along a bypass flow path B defined within a nacelle 18, and also drives air along a core flow path C for compression and communication into the combustor section 26 then expansion through the turbine section 28. Exhaust gas flow 35 is finally exhausted through a nozzle 34.

The exemplary core engine 25 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner engine shaft 40 that interconnects a first (or low) pressure compressor 44 and a first (or low) pressure turbine 46. The inner engine shaft 40 is connected to the fan section 22 through a speed change mechanism, which in one example is illustrated as a geared architecture 48 to drive the fan section 22 at a lower speed than the low speed spool 30. The inner engine shaft 40 may interconnect the low pressure compressor 44 and low pressure turbine 46 such that the low pressure compressor 44 and low pressure turbine 46 are rotatable at a common speed and in a common direction. Although this application discloses geared architecture 48, its teaching may benefit direct drive engines having no geared architecture.

The high speed spool 32 includes an outer engine shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner engine shaft 40 and the outer engine shaft 50 are concentric and rotate via bearing systems 38 about the engine central longitudinal axis A which is collinear with their longitudinal axes.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

The water augmentation system 62 includes a water tank 64, a water pump 66 and a valve system 68. The example water tank 64 is shown schematically in Figure 2 and may include one of the water storage spaces 92, 94 or the removable water tank 90. The water tank 64 may be a rigid tank that is permanently located within the aircraft structure 88. The water tank 64 may be located in the fuselage 86, nacelle structure 18 or any other structure of the aircraft 100. The water tank 64 may also be removable as is illustrated by tank 90 in Figure 1. Figure 1 illustrates different locations for a water tank and may include one, all or a combination of the example water storage spaces 92, 94, and water tank 90.

In one example embodiment, the tank 90 is removable and configured to fit within the defined cargo area 84. The removable tank 90 is installed within the cargo area 84 in a manner that does not impede the storage and removal of cargo. Although several locations on the aircraft 100 are illustrated by way of example, other locations, both permanent and temporary may also be utilized and are within the contemplation and scope of this disclosure.

The example water augmentation system 62 includes a water transport and control system 65 that provides for filling, storage, and communication of water to locations within the propulsion system 20 as needed to provide the desired water augmentation according to a selected mode of operation. In one example embodiment, the water transport and control system 65 include at valve system 68 with at least a first valve 70 and a second valve 72. The valves 70 and 72 control water flow to a first circuit 80 and a second circuit 82. The first circuit 80 provides water to the compressor section 24. The second circuit 82 provides water to the combustor section 26.

Water through the first circuit 80 to the compressor section 24 may be injected directly into the core flow C to provide intercooling between compressor sections 44, 52. Alternatively, the intercooling water flow may also include a cooling water flow that is not injected into the core flow C. The intercooling flow may also be injected directly into the core flow C. In one disclosed example, water is injected at a location 138 between compressor sections 44, 52. The injected water cools the core flow C and also increases mass flow. Cooling of the core flow C reduces engine wear and can compensate for operation on hotter than average days. Moreover, the introduction of water into the compressor section 24 may enable operation from high altitude airports and/or high temperature locations by maintaining engine operation within desired operating temperatures.

The introduction of water through the second circuit 82 into the combustor section 26 may augment available engine thrust by increasing mass flow through the turbine section 28. In one example embodiment, water is injected at the location 140 directly into the combustor 56. The introduction of water into the combustor section 26 improves engine efficiencies by increasing mass flow through the turbine section 28 to generate power without requiring additional work in the compressor section 24.

Although example water injection locations and uses are described by way of example, the water augmentation system 62 may be configured to introduce water anywhere along the core flow path C to either mix with the core flow C and/or cool the core flow C. Moreover, the example water augmentation system 62 is disclosed by way of example and may include additional injection locations and/or cooling configurations.

The example water augmentation system 62 further includes an inlet 104 for receiving water from the ground based supply 96. The inlet 104 is shown schematically and is disposed on an externally accessible location of the aircraft 100. The inlet 104 may also be located directly on the removable tank 90. Although a single inlet 104 is shown, more inlets may be provided to accommodate different locations and different water tanks that may be located throughout the aircraft 100.

The water augmentation system 62 further includes a purge system 98 that provides for the removal of water from the tank 64, valves 70, 72 and any of the conduits and fluid transport devices that may contain water. Water may be purged to prevent freezing when water is not used. The purge system 98 may also be utilized during engine operation to remove water after water augmentation is discontinued. For example, water augmented operation may be utilized during takeoff and climb portions of a flight sequence. When water augmentation is no longer needed, such as, for example, upon reaching steady state operation in a climb or cruise configuration, the purge system 98 is actuated to remove any remaining water to the ambient environment to reduce weight and prevent freezing.

In one example embodiment, the inlet 104 is in fluid communication with a tank fill circuit 108 that is connectable to a tank inlet 106 disposed on the selectively installable water tank 90. Accordingly, the water tank 90 may be installed empty to ease movement and securement within the cargo area 84. The tank inlet 106 is connected to the tank fill circuit 108 for filling through the inlet 104 from the ground water supply 96. When the tank 90 is removed, the fill circuit 108 is disconnected. The fill circuit 108 may further be in communication with the purge system 98 to provide for emptying of the water tank 90 before removal.

The water augmentation system 62 is controlled by the controller 74 in view of the received data 78 and a selected mode. The controller 74 operates the water augmentation system 62 and water transport and control system 65. The transport and control system 65 may include additional valving, pumps, conduits, and other flow control devices utilized to control, direct, and communicate water to the core engine 25.

A monitoring device 142 is associated with the water tank 64 and provides information to the controller 74 that is indicative of a volume of water available for use by the water augmentation system 62. Although a single monitoring device 142 is shown way of example, the device 142 may include a system of devices utilized to provides information to the controller 74 indicative of the amount of water available. A heater 102 is provided with the water tank 64 to prevent freezing of water during operation to prevent damage and maintain operation.

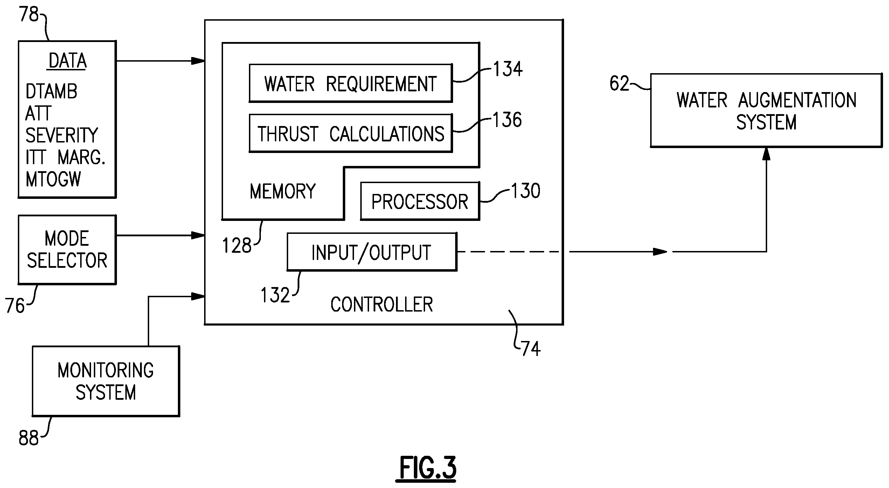

Referring to Figure 3, with continued reference to Figures 1 and 2, the controller 74 is programmed to operate the water augmentation system 62 and water transport and control system 65. The controller 74 may further be programmed to operate other systems and devices, such as the purge system 98 and the heater 102, to facilitate operation of the water augmentation system 62.

The example controller 74 is a device and system including a memory device 128, a processor 130, and an input/output communication module 132 for performing necessary computing or calculation operations of the water augmentation system 62. The memory device 128 may include instructions, modules and/or applications needed for operation of the water augmentation system 62 and the propulsion system 20. In one example embodiment, a water requirement calculation module 134 and a thrust calculation module 136 are included in the memory device 128. The modules 134, 136 may include instructions or be separate modules that interact with the controller 74 to provide the necessary information utilizing input information.

In one example embodiment, the controller 74 is configured and programmed to receive data 78 indictive of propulsion system operation, ambient conditions and other information required for calculation of thrust and water requirements. In one example embodiment, the data 78 includes deferential temperature from ambient (DTAMB), altitude (Alt), severity, interstate turbine temperature margin (ITT marg), weight and balance data (e.g., gross weight of the aircraft 20, weight distribution, etc.), and maximum take-off gross weight (MTOGW). Although several different data inputs are shown and described by way of example, other data and information may be utilized and included. The data 78 may automatically be provided to the controller 74 (e.g., received from external computing device, sensor data, etc.) or be input by an operator.

The example controller 74 further receives information regarding a mode of operation from the mode selector 76 and information regarding water within the tank 64 from the monitoring device 142. Other information as may be useful to initiate and control operation of the water augmentation system 62 may also be provided and is within the contemplation and scope of this disclosure. For example, runway data (e.g., length, direction, surface, surface temperature, etc.), wind data (e.g., speed, direction, etc.), and/or the like may be received by the controller 74 for the calculation of thrust and water requirements.

The controller 74 may be specially constructed for operation of the control water augmentation system 62, or it may comprise at least a general-purpose computer selectively activated or reconfigured by software instructions stored in a memory device. The controller 74 may further be part of full authority digital engine control (FADEC) or an electronic engine controller (EEC).

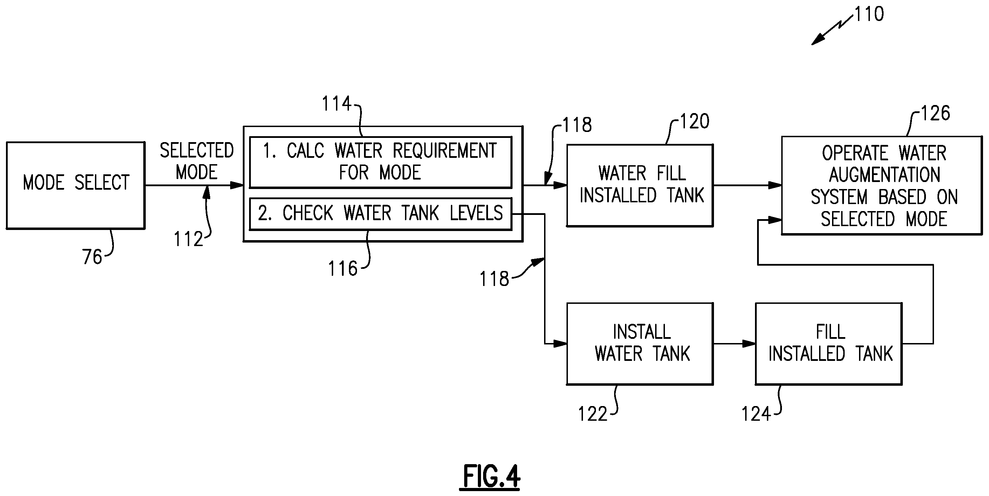

Referring to Figure 4, with continued reference to Figures 1, 2 and 3, a process of operating the propulsion system 20 with the water augmentation is schematically represented and indicated at 110. The mode selector 76 is utilized by an operator (e.g., pilot, remote operator) to select how and if water augmentation will be used for a desired flight profile. A selected mode as indicated at 112 prompts the controller 74 to determine how much water is needed for the specific selected profile as indicated at 114. In an alternate embodiment, the amount of water needed for water augmentation at take-off may be calculated by a remote system (e.g., remote from aircraft 20) and delivered (e.g., sent) to the controller 74.

The controller 74 and/or remote system may utilize aircraft operating, ambient conditions and any other parameters indicative of operation according to the selected mode to calculate the required amount of water. In one example, the calculations are made based on data indicative of wear and life of the engine as is indicated at 78 in Figure 3. In one example embodiment, the data 76 includes deferential temperature from ambient (DTAMB), altitude (Alt), Severity, interstate turbine temperature margin (ITT marg), runway data (e.g., length, direction, surface, surface temperature, etc.), wind data (e.g., speed, direction, etc.), and maximum take-off gross weight (MTOGW). Other parameters may also be utilized and are within the contemplation and scope of this disclosure.

Once, it is determined how much water is required, and the amount of currently onboard the aircraft is determined as indicated at 116, a determination as to if sufficient tank capacity is available on board the aircraft to hold the amount of water needed as is indicated at 118. If sufficient water storage space is available, the existing tanks are monitored to determine if additional water is needed. If more water is needed, then additional water can be added as indicated at 120. Water may be added to completely fill any available tank 64. Alternatively, water may be added to provide the required amount of water without necessarily filling the entire tank.

However, if sufficient water tank capacity is not present, then a tank, such as the selectively installable tank 90, can be installed as indicated at 122. The installable tank 90 may be of default size, or may be one of several available sizes that fit within the cargo area 84 that provide capacity for a specific selected mode or water requirement. Once the tank 90 is installed, water may be filled to meet the determined water requirements as indicated at 124.

Operation may optionally proceed, with the water augmentation system 62 introducing water to provide the desired engine augmentation at 126. In one example embodiment, durability augmentation is provided by injecting water between compressor sections. In another example embodiment, water is injected into a cooling airflow. In still another example embodiment, the water augmentation system 62 is operated according to an emission reduction mode. In the emission reduction mode, water is added to the combustor 56.

The water augmentation system 62 provides water at the specified location that corresponds with the selected mode. The water augmentation system 62 may inject water according to, among other things, a specified volume of water at a defined rate and a location of water injection. Other water injection parameters may be utilized to provide the desired engine performance augmentation. Water may be in liquid form or in gaseous form or in a mixed liquid and gaseous form depending on further operational requirements.

In each of the disclosed operating examples, the mode of water augmentation is selected by the operator to augment operation as desired. The selected mode may be implemented at the discretion of the operator. The example water augmentation system provides the operator with capability of selecting operation and assuring sufficient water to implement the desired operation. Moreover, the selectively fillable and installable water tanks provide flexibility in selectively implementing water augmentation without hindering operation when water augmentation is not desired.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. An aircraft propulsion system (20) comprising:
a core engine (25) comprising a main compressor section (22), a combustor (56), a main turbine section (28), a propulsive fan (22), and a core flow path (C), wherein the core flow path passes through the main compressor section, where an inlet airflow is compressed and is communicated to the combustor to generate an exhaust gas flow (35), that is expanded through the main turbine section to generate power used to drive the main compressor section and the propulsive fan;
a water augmentation system (62) comprising at least one location (138; 140) where water is communicated into the core flow path;
an aircraft structure (88) comprising a water storage space (92; 94);
a water storage system (65) operable for storing and supplying water to the water augmentation system, wherein the water storage system includes a portion corresponding to the water storage space; and
a controller (74) programmed to operate the water augmentation system (62) according to a selected mode of operation.

2. The aircraft propulsion system (20) as recited in claim 1, further comprising a removable tank (90) that is selectively mountable into the water storage space.

3. The aircraft propulsion system (20) as recited in claim 1 or 2, wherein the water storage space comprises a portion of a cargo space (84) within the aircraft structure (88).

4. The aircraft propulsion system (20) as recited in claim 2, wherein the water storage space comprises a portion of a cargo space (84) within the aircraft structure (88), and the water storage space is arranged in the cargo space such that other items may be stored and removed without removing the removable tank.

5. The aircraft propulsion system (20) as recited in any preceding claim, wherein the water augmentation system comprises an intercooling system configured to inject water into the main compressor section (24) for cooling a portion of an airflow through the main compressor section (24).

6. The aircraft propulsion system (20) as recited in any preceding claim, wherein the water augmentation system comprises a combustor injection system configured to inject water into the combustor (56) to increase a mass flow of the exhaust gas expanded through the main turbine section (28).

7. The aircraft propulsion system (20) as recited in any preceding claim, further comprising a monitoring system (142) configured to generate information indicative of an amount of water available for use by the water augmentation system.

8. The aircraft propulsion system (20) as recited in any preceding claim, wherein the water storage space comprises a portion (92, 94) of an aircraft fuselage (86) or an engine nacelle (18) that is selectively fillable with water.

9. The aircraft propulsion system (20) as recited in any preceding claim, wherein the water storage system further comprises a transport system configured to supply water from a storage tank (64; 90) to the water augmentation system and to purge water from the storage tank and the water augmentation system.

10. The aircraft propulsion system (20) as recited in any preceding claim, wherein the water storage system is configured to prevent water stored therein from freezing.

11. An aircraft propulsion system (20) comprising:
a core engine (25) comprising a main compressor section (22), a combustor (56), a main turbine section (28), a propulsive fan (22), and a core flow path (C), wherein the core flow path passes through the main compressor section, where an inlet airflow is compressed and is communicated to the combustor to generate an exhaust gas flow (35), that is expanded through the main turbine section to generate power used to drive the main compressor section and the propulsive fan;
a water augmentation system (62) comprising at least one location (138; 140) where water is communicated into the core flow path;
an aircraft structure (88) comprising a defined water storage space (92; 94);
a water storage system (65) operable for storing and supplying water to the water augmentation system (62), wherein the water storage system includes a storage tank (90; 64) that is removably mounted into the defined water storage space (92); and
a controller (74) programmed to operate the water augmentation system (62) according to a selected mode of operation,
optionally wherein:
the water augmentation system comprises an intercooling system configured to inject water into the main compressor section for cooling a portion of a core flow through the main compressor section and a combustor injection system configured to inject water into the combustor to increase a mass flow of the exhaust gas expanded through the main turbine section; and/or
the water augmentation system further comprises a control system (65) operated by the controller for controlling transport of water from the water storage system to the water augmentation system according to the selected operating mode; and/or
the water storage space comprises a portion of a cargo space (84) within the aircraft structure (88); and/or
the water storage system further comprises a transport system configured to supply water from a storage tank (64; 90) to the water augmentation system and to purge water from the storage tank and the water augmentation system.

12. A method of configuring operation of an aircraft propulsion system (20) comprising:
selecting an operating mode of a water augmentation system (62);
determining an amount of water required to operate an aircraft propulsion system (20) according to the selected operating mode of the water augmentation system;
determining an amount of water that may be held within a water storage space (92; 94) of the aircraft; and
filling the water storage space to include the determined amount of water required, wherein the water storage space is operably coupled to an engine to enable injection of water from the water storage space to the engine.

13. The method as recited in claim 12, wherein selecting the operating mode of the water augmentation system (62) comprises selecting one of a durability mode, an emission reduction mode, and a thrust augmentation mode.

14. The method as recited in claim 13, where the water augmentation system (62) is configured to introduce water into a compressor section (24) of the aircraft propulsion system (20) in the durability mode and into the combustor section (26) of the aircraft propulsion system (20) in one of the emission reduction mode and the thrust augmentation mode.

15. The method as recited in any of claims 12 to 14, wherein:
the water storage space comprises a portion of a cargo space (84) within the aircraft structure (88) and the method further comprises installing a water storage tank (64; 90) into the portion of the cargo space; and/or
the water storage space (92, 94) comprises at least a portion of a fuselage (86) or an engine nacelle (18).
